# FASCICULE DE BREVET EUROPEEN

(11) **EP 1 413 048 B1**
(45) Date de publication et mention de la délivrance du brevet: **19.08.2009**
(21) Numéro de dépôt: 02767580.0
(22) Date de dépôt: 18.07.2002
(51) Int. Cl.: H02P 25/08

(54) **PROCEDE DE COMMANDE D'UNE MACHINE A RELUCTANCE VARIABLE**
VERFAHREN ZUR STEUERUNG EINER MASCHINE MIT VARIABLER RELUKTANZ
METHOD FOR CONTROLLING A VARIABLE-RELUCTANCE MACHINE

(30) Priorité: 30.07.2001 FR 0110186
(43) Date de publication de la demande: 28.04.2004
(73) Titulaire: Valeo Systèmes de Contrôle Moteur, 95520 Osny (FR)
(72) Inventeur: LAURENT, Jean-Marie, Louis, F-95520 Osny (FR); SOREL, Stephane, Claude, F-95610 Eragny (FR); GUILLARME, Nicolas, 95630 Meriel (FR); WEVERS, Bruno, Bloomfield Hills, MI 48301 (US)
(86) Numéro de dépôt international: PCT/FR2002/002565
(87) Numéro de publication internationale: WO 2003/012973

(56) Documents cités:
- EP-A- 0 526 660
- EP-A- 0 692 862
- EP-A- 1 039 625
- DE-A- 4 314 290
- GB-A- 2 274 361
- KRISHNAN R ET AL: "ANALYSIS AND DESIGN OF A SINGLE SWITCH PER PHASE CONVERTER FOR SWITCHED RELUCTANCE MOTOR DRIVES" PROCEEDINGS OF THE ANNUAL POWER ELECTRONICS SPECIALISTS CONFERENCE. TAIPEI, TAIWAN, JUNE 20 - 24, 1994, NEW YORK, IEEE, US, vol. 1 CONF. 25, 20 juin 1994 (1994-06-20), pages 485-492, XP000492053 ISBN: 0-7803-1860-9

## Description

La présente invention est relative à un procédé de commande d'une machine électrique polyphasée dont l'inductance des bobinages est exploitable. On entend par exploitable les bobinages dont la constante de temps électrique est supérieure à la période de découpage générée par le procédé de commande.

Plus particulièrement, l'invention concerne un procédé de commande pour une machine électrique à réluctance variable qui permet d'exploiter l'énergie stockée dans les bobinages inductifs de la machine électrique, et ce, en fonction de divers états de fonctionnement de la machine.

Ainsi, à partir d'une machine électrique à réluctance variable, ce procédé de commande doit permettre d'assurer tout ou partie des fonctions suivantes :
- réaliser une fonction démarrage de la machine électrique à partir d'un réseau primaire d'alimentation constitué par exemple par une batterie,
- réaliser une fonction générateur sur le réseau primaire,
- réaliser une fonction générateur sur au moins un réseau secondaire, constitué par exemple par une batterie,
- réaliser une fonction alimentation d'au moins un réseau secondaire à partir du réseau primaire,
- réaliser une fonction charge ou recharge d'au moins une batterie d'accumulateurs à partir d'au moins un réseau secondaire,
- réaliser une fonction d'alimentation primaire à partir d'au moins un réseau secondaire.

On connaît notamment des machines à réluctance variable comportant au moins un bobinage inductif, le bobinage inductif étant relié à un réseau primaire d'alimentation en énergie électrique par l'intermédiaire d'un dispositif de commande comprenant, entre un point de connexion du bobinage considéré et des bornes du réseau primaire, au moins un demi-pont d'un variateur adapté à la commande de ladite machine, ce demi-pont étant formé par des premier et second interrupteurs commandés, les premier et second interrupteurs pouvant occuper chacun un état électrique passant ou ouvert. Une telle machine à réluctance est par exemple divulguée dans le document EP-A-0 692 862 Le document GB-A-2 274 361 décrit un convertisseur pour machine à réluctance permettant de transmettre l'énergie stockée dans les bobinages de la machine à un réseau secondaire alternatif à l'aide d'un onduleur à thyristors. Le document EP-A-1 039 625 décrit une machine à réluctance pouvant être alimentée par une source de tension élevée obtenue par un convertisseur élévateur de tension relié à une batterie et par une source basse tension constituée de la batterie elle-même.

Ces machines donnent toute satisfaction d'un point de vue technique, mais leur procédé de commande ne permet pas d'exploiter l'énergie électrique emmagasinée dans les bobinages.

La présente invention a notamment pour but de pallier cet inconvénient.

A cet effet, un procédé de commande d'une machine du genre en question est **caractérisé en ce que :**
- on relie le point de connexion dudit bobinage à au moins un troisième interrupteur de déviation commandé pouvant occuper un état électrique ouvert ou un état électrique passant, ce troisième interrupteur étant relié à au moins un réseau secondaire d'alimentation électrique,
- on associe l'état électrique du troisième interrupteur à celui du demi-pont, de telle manière que l'énergie électrique stockée dans le bobinage inductif de la machine soit retransmise au réseau principal et/ou au réseau secondaire,
- la commande du troisième interrupteur relié à un premier réseau secondaire est affectée de manière exclusive par rapport à celle, d'un autre troisième interrupteur relié entre le point de connection dudit bobinage et un deuxième réseau secondaire.

Grâce à ces dispositions, on utilise les bobinages inductifs de la machine à réluctance variable comme autant d'éléments de stockage d'énergie (source de courant) afin de pouvoir réaliser des échanges d'énergie en- tre les divers réseaux ou entre la machine et les divers réseaux.

Dans des modes de réalisation préférés de l'invention, on peut éventuellement avoir recours en outre à l'une et/ou à l'autre des dispositions suivantes :
- la commande d'un troisième interrupteur est effectuée de manière exclusive par rapport à celle des premier et second interrupteurs,
- on introduit un temps mort entre les commandes des troisièmes interrupteurs, afin d'éviter des courts circuits entre le réseau primaire et les réseaux secondaires d'alimentation électrique.

Selon un autre aspect de l'invention, celle-ci consiste en l'utilisation du procédé de commande pour réaliser un convertisseur statique élévateur ou abaisseur de tension, ou un variateur et convertisseur simultané.

Selon encore un autre aspect de l'invention, celle-ci consiste en l'utilisation de ce même procédé de commande à un alterno-démarreur à réluctance variable bi-tension.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un demi-pont de commande d'une machine à réluctance variable,
- la figure 2 est une vue schématique d'un demi-pont de commande d'une machine à réluctance variable selon l'invention,
- la figure 3 est une vue schématique d'une machine à réluctance variable fonctionnant en élévateur de tension,
- la figure 3a illustre le diagramme de commande des interrupteurs de la machine de la figure 3,
- la figure 4 est une vue schématique d'une machine à réluctance variable fonctionnant en abaisseur de tension,
- La figure 4a illustre le diagramme de commande des interrupteurs de la machine de la figure 4,
- la figure 5 est une vue schématique d'une machine à réluctance variable fonctionnant en convertisseur de tension,
- Les figures 5a, 5b illustrent le diagramme de commande des interrupteurs de la machine de la figure 5, respectivement en mode recharge du réseau secondaire, et en mode décharge du réseau secondaire,
- la figure 6 est une vue schématique d'une machine à réluctance variable comportant une pluralité de bobinages inductifs reliée à un réseau secondaire d'alimentation électrique,
- la figure 7 est une vue schématique d'une machine à réluctance variable comportant une pluralité de réseaux secondaires d'alimentation électrique,
- la figure 8 est vue schématique d'un alterno-démarreur.

Sur les différentes figures, les mêmes références désignent des éléments identiques ou similaires.

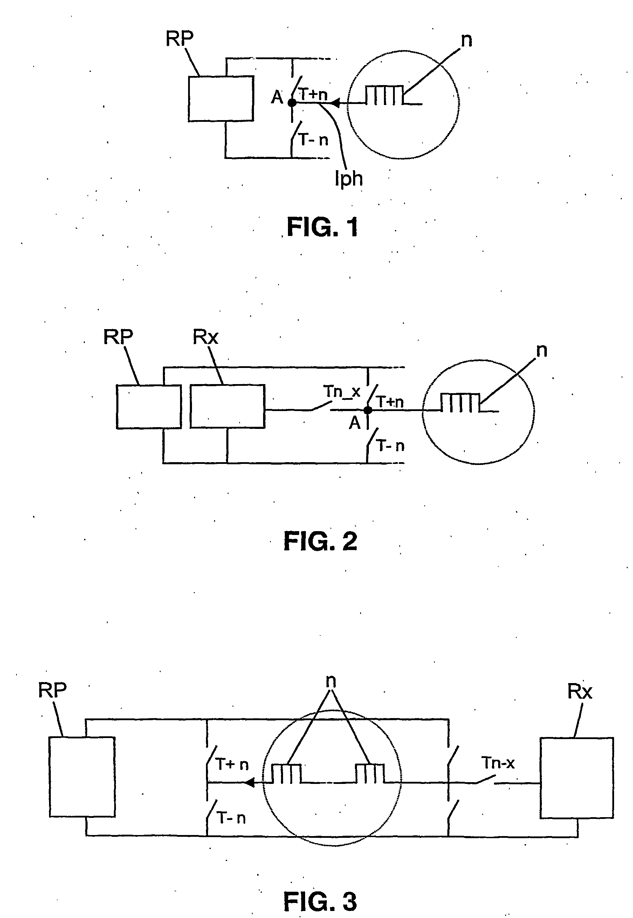

Sur la figure 1, on a représenté la structure classique d'un demi-pont de variateur dédié à la commande d'une machine à réluctance variable. Pour simplifier l'exposé, un seul des bobinages inductifs de la machine n'est représenté sur la figure 1 et ce bobinage est repéré n.

Le courant Iph sortant de ce bobinage inductif attaque, au niveau d'un point A de connexion du bobinage, le point milieu A d'un demi-pont appartenant à un variateur de commande de ladite machine, ce demi-pont étant constitué par des premier et second interrupteurs commandés T+n et T-n, montés en parallèle entre le point de connexion dudit bobinage et un réseau primaire d'alimentation électrique RP. Ce réseau d'alimentation électrique est constitué par une tension continue de type notamment 0-42V ou 0-12V.

Dans le cas d'une machine polyphasée, la connexion inductive entre la machine et les demi-ponts du variateur peut être réalisée soit de manière indépendante et dans ce cas aucun couplage n'est réalisé entre les phases, soit de manière dépendante, dans ce cas le couplage entre les phases et les demi-ponts est effectué à l'aide d'un montage triangle ou étoile.

La figure 2 représente une structure de variateur dérivée de la figure 1, sur laquelle on a fait figurer les enseignements de l'invention. A savoir, qu'on a associé à au moins un demi-pont du variateur au moins un troisième interrupteur commandé Tn-x, cet interrupteur reliant le point de connexion A d'au moins un bobinage à au moins un réseau secondaire d'alimentation électrique Rx.

Afin d'éviter des courts circuits entre les divers réseaux d'alimentation électrique, il est nécessaire que la commande des premier et second interrupteurs T+n, T-n soit exclusive par rapport à la commande du troisième interrupteur Tn-x, et pour se faire on introduit des temps morts dans la commande de ces interrupteurs.

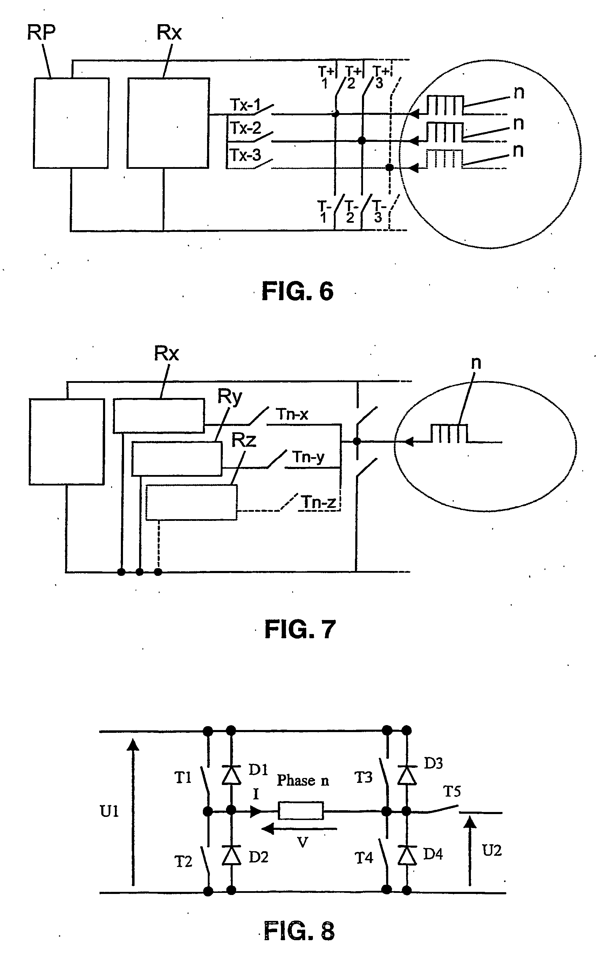

On veillera également à rendre complètement exclusive la commande des troisièmes interrupteurs Tn-x, Tn-y, Tn-z entre-eux (visibles en figure 7), ceux-ci pouvant être respectivement reliés à des réseaux secondaires Rx, Ry, Rz.

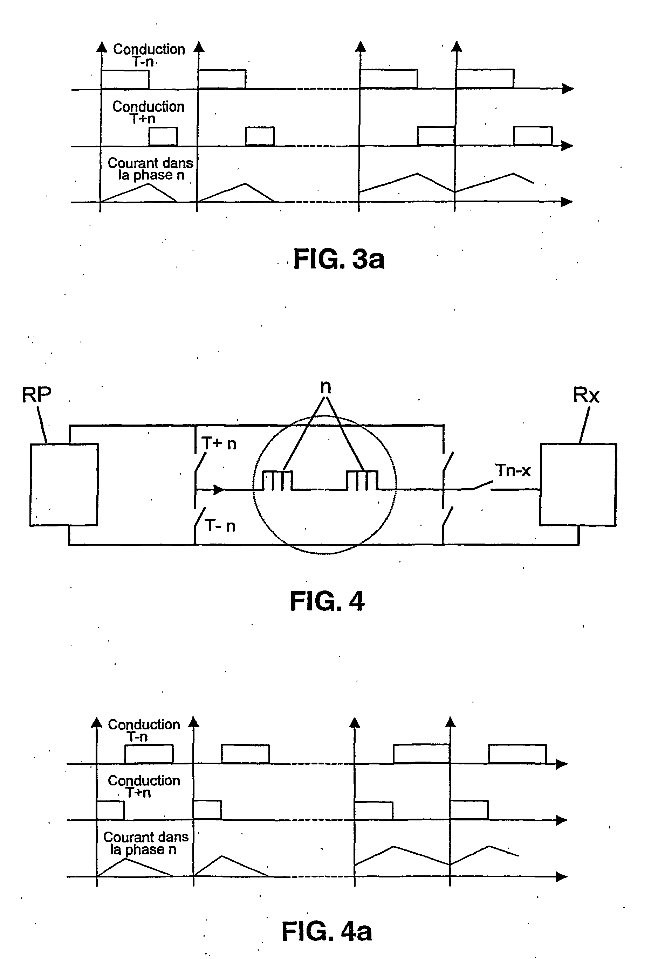

La figure 3 représente une utilisation de la machine à réluctance variable représentée en figure 2, en tant que convertisseur statique de tension entre le réseau d'alimentation primaire RP et un réseau d'alimentation secondaire Rx. Dans cet exemple, la machine à réluctance variable est arrêtée (elle ne tourne pas).

En figure 3, le procédé de commande permet de réaliser un fonctionnement en mode élévateur à savoir une recharge du réseau primaire par un réseau secondaire Rx de tension moins élevée.

Dans ce mode de fonctionnement continu, le troisième interrupteur Tn-x reste passant. La régulation de puissance transmise vers le réseau primaire d'alimentation électrique se fait par le rapport des temps de magnétisation du bobinage (conduction de T-n) et des temps de démagnétisation de ce même bobinage (conduction de T+n), comme cela est illustré en figure 3a.

La machine à réluctance variable représentée en figure 4 est identique à celle représentée en figure 3, mais son fonctionnement est différent. En effet, le courant sortant du point de connexion du bobinage est dans un sens opposé à celui représenté en figure 3. Dans cette configuration, il s'agit toujours d'un convertisseur statique entre le réseau primaire RP et au moins un réseau secondaire Rx, mais fonctionnant en mode abaisseur de tension (recharge d'au moins un réseau secondaire par le réseau primaire de tension plus élevée).

Dans ce mode de fonctionnement continu, le troisième interrupteur commandé Tn-x demeure passant et la régulation de la puissance entre le réseau primaire RP et le réseau secondaire Rx se fait par le rapport des temps de magnétisation de la self (conduction de T-n) et des temps de démagnétisation (conduction de T+n), comme cela est illustré en figure 4a.

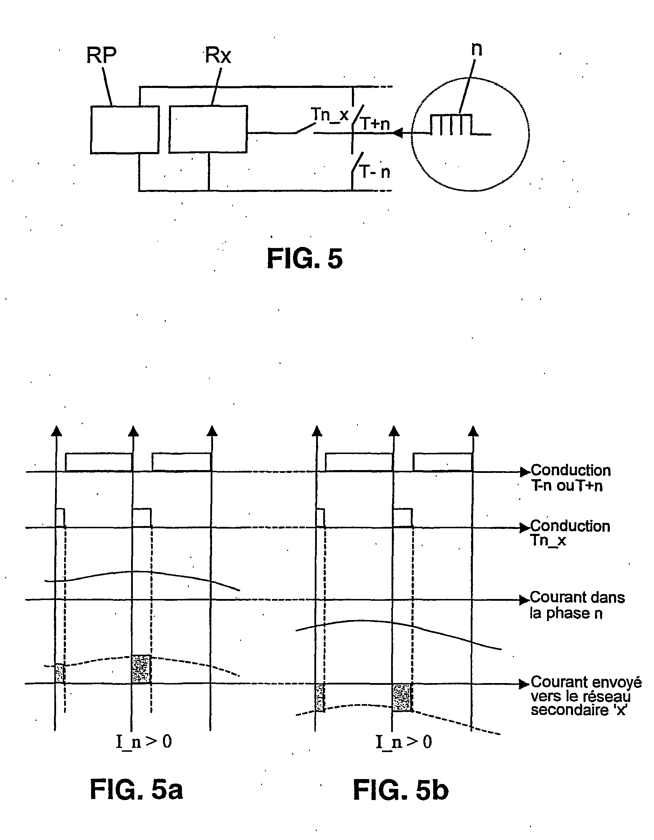

La figure 5 représente une utilisation de la machine à réluctance variable représentée en figure 2, en tant que convertisseur et variateur entre le réseau d'alimentation primaire RP et un réseau d'alimentation secondaire Rx. Dans cet exemple, la machine à réluctance variable est en fonctionnement (elle tourne).

En fonction des besoins électriques, on charge ou on décharge le réseau secondaire Rx en prélevant du courant d'au moins un bobinage. On notera que le procédé est adapté pour prélever du courant, et ce, quel que soit son sens de circulation. L'intensité de ce courant de charge ou de décharge sera adaptée en fonction du temps de conduction du troisième interrupteur Tn-x, comme cela est illustré en figure 5a (mode recharge du réseau secondaire) et en figure 5b (mode décharge du réseau secondaire).

La figure 6 représente une généralisation de l'invention à une machine à réluctance variable comportant n bobinages inductifs.

Au niveau de sa structure, cette machine est identique à celle représentée notamment en figures 3 ou 4, mais on associe à chaque bobinage 1 à n, un troisième interrupteur commandé Tx-1, Tx-2, Tx-3..., chacun de ces troisièmes interrupteurs étant connecté à un réseau secondaire d'alimentation Rx et pouvant fonctionner selon les modalités décrites précédemment.

La figure 7 représente une autre forme de réalisation de l'invention comportant une pluralité de réseau secondaires Rx, Ry, Rz, pouvant être chacun à des potentiels d'alimentation différents.

Dans cette forme de réalisation, au niveau d'un point de connexion d'un bobinage inductif n, on associe, en parallèle, une pluralité de troisièmes interrupteurs de déviation commandés T1, T2, Tx, chacun de ces interrupteurs étant relié à un réseau d'alimentation secondaire Rx, Ry, Rz.

Compte tenu, que la masse, le réseau primaire, et les réseaux secondaires sont à des potentiels électriques différents, par exemple respectivement 0, 12, 42 V, il est nécessaire que les premier, deuxième, troisième interrupteurs, respectivement T+i, T-i, Tx-i reliés à un même point de connexion d'un bobinage inductif ne soient pas commandés simultanément. (dans cet exemple, i varie de 1 à n).

On comprend de ce qui précède que l'on peut généraliser les enseignements des formes de réalisation d'une machine à réluctance variable représentées en figures 6 et 7, en combinant à la machine de la figure 7, les n bobinages de la figure 6. On décrira maintenant en figure 8, une utilisation particulière de l'invention à un alterno-démarreur à partir d'une batterie U1=42V, adaptée pour la recharge d'une batterie U2=12V, et permettant la réalisation d'un convertisseur bidirectionnel U1/U2.

Les fonctions de ce montage sont alors :
- réaliser la fonction moteur (ou démarreur) à partir de la batterie 42 V ;
- réaliser la fonction générateur sur le réseau 42 V ;
- réaliser la fonction générateur sur le réseau 12 V ;
- réaliser la fonction alimentation du réseau 12 V à partir du réseau 42 V ;
- réaliser la fonction charge de la batterie 42 V à partir de la batterie 12 V.

Les deux premières fonctions sont celles demandées à un alterno-démarreur « classique » et les trois dernières sont celles demandées à un convertisseur bitension.

En mode alterne-démarreur classique (42V), seuls les composants T1, D2, D3, T4 sont utilisés, ces composants sont préférentiellement des transistors pour les interrupteurs et des diodes. Dans ce cas, les bobinages de la machine sont exclusivement alimentés par le réseau principal (U1=42V). L'interrupteur T5 est ouvert et seuls T1, D2, D3 et T4 fonctionnent lorsque le courant sortant du bobinage est positif. Quand ce courant est négatif, D1, T2, T3 et D4 fonctionnent.

La combinaison des interrupteurs Tx et des diodes Dx est préférentiellement réalisée en technologie MOS.

Dans ce mode de fonctionnement, il est possible d'utiliser l'interrupteur T2 lors de la conduction de D2 afin de réduire les pertes par effet Joule. L'utilisation d'un interrupteur en parallèle sur D3 peut également permettre de faire la même chose, mais dans ce cas les transistors T3, T4, T5 doivent avoir un fonctionnement exclusif (un seul passant à la fois).

En mode alternateur (machine tournante) ou en mode convertisseur 42V/12V (machine arrêtée), seuls les composants T1, D2, et T5 sont utilisés.

Un autre mode de fonctionnement peut être utilisé. Il s'agit du mode convertisseur 12V/42V ou « boost ». Dans ce cas, on utilise l'inductance de la machine. Les composants utilisés sont alors D1, T2, T5.

En termes de contraintes de fonctionnement, il est important de noter que T1 et T2 ne doivent pas conduire simultanément, cela provoquerait un court circuit du réseau 42V. T5 et T4 ne doivent pas également conduire simultanément, cela provoquerait un court-circuit du réseau 12V. En fonctionnement « boost », compte tenu que le courant dans la machine est inversé et que le réseau 12 V fournit de l'énergie, il est donc nécessaire que l'interrupteur T5 soit réversible en courant.

L'obtention de ces différents modes de fonctionnement est conditionnée par le pilotage adéquat des interrupteurs et la gestion optimale de leurs divers états électriques : à savoir :
- un mode ON ou passant, les premier et second interrupteurs d'un même demi-pont sont fermés et conduisent, la tension U1 ou U2 est appliquée aux bornes du bobinage n,
- un mode OFF ou ouvert, les premier et second interrupteurs sont bloqués. On applique la tension - U1 ou - U2 quand le courant est non nul aux bornes du bobinage n ou on applique une tension nulle quand le courant est nul,
- un mode « free wheel », un des interrupteurs est ouvert lorsque l'autre est passant et réciproquement, on obtient ainsi un fonctionnement en roue libre et la tension aux bornes du bobinage n est nulle,
   cette gestion devant être couplée avec celle du troisième interrupteur.

La génération des commandes de l'ensemble des composants peut être réalisée soit de façon « hardware » par un circuit spécialisé du type notamment FPGA, soit de façon « software » par un microcontrôleur.

## Revendications

1. Procédé de commande d'une machine comportant au moins un bobinage inductif (n), le bobinage inductif étant relié à un réseau primaire (RP) d'alimentation en énergie électrique par l'intermédiaire d'un dispositif de commande comprenant, entre un point de connexion (A) du bobinage (n) considéré et des bornes du réseau primaire (RP), au moins un demi-pont d'un variateur adapté à la commande de ladite machine, ce demi-pont étant formé par des premier et second interrupteurs commandés (T+n, T-n), les premier et second interrupteurs pouvant occuper chacun un état électrique passant ou ouvert, **caractérisé en ce que :**
- on relie le point de connexion (A) dudit bobinage (n) à au moins un troisième interrupteur de déviation commandé (Tn-x) pouvant occuper un état électrique ouvert ou un état électrique passant, ce troisième interrupteur (Tn-x) étant relié à au moins un réseau secondaire d'alimentation électrique (Rx),
- on associe l'état électrique du troisième interrupteur (Tn-x) à celui du demi-pont, de telle manière que l'énergie électrique stockée dans le bobinage inductif (n) de la machine soit retransmise au réseau principal et/ou au réseau secondaire,
- la commande du troisième interrupteur (Tn-x) relié à un premier réseau secondaire (Rx) est effectuée de manière exclusive par rapport à celle d'un autre troisième interrupteur (Tm-y) relié entre le point de connection (A) dudit bobinage et un deuxième réseau secondaire (Ry).

2. Procédé de commande selon la revendication 1, dans lequel la commande du troisième interrupteur (Tn-x) étant effectuée de manière exclusive par rapport à celle des premier et second interrupteurs (T+n, T-n).

3. Procédé de commande selon l'une quelconque des revendications précédentes, dans lequel on introduit un temps mort entre les commandes des troisièmes interrupteurs (Tn-x), afin d'éviter des courts circuits entre le réseau primaire (RP) et les réseaux secondaires d'alimentation électrique (Rx).

4. Utilisation du procédé de commande selon l'une quelconque des revendications 1 à 3 pour un convertisseur statique élévateur ou abaisseur de tension.

5. Utilisation du procédé de commande selon l'une quelconque des revendications 1 à 3 pour un variateur et convertisseur simultané.

6. Utilisation du procédé de commande selon l'une quelconque des revendications 1 à 3 pour alterno-démarreur à réluctance variable bi-tension.

## Claims

1. Method of controlling a machine having at least one inductive coil (n), the inductive coil being connected to a primary power supply circuit (RP) via a control device comprising, between a connection point (A) of the coil (n) in question and terminals of the primary circuit (RP), at least one half-bridge of a variator suitable for controlling said machine, this half-bridge being formed by first and second controlled switches (T+n, T-n), it being possible for the first and second switches to be each in an electrical on-state or off-state, **characterized in that:**
- the connection point (A) of said coil (n) is connected to at least a diverting third controlled switch (Tn-x) that can be in an electrical off-state or electrical on-state, this third switch (Tn-x) being connected to at least one secondary power supply circuit (Rx);
- the electrical state of the third switch (Tn-x) is associated with that of the half-bridge, in such a way that the power stored in the induction coil (n) of the machine is retransmitted to the primary circuit and/or to the secondary circuit; and
- the operation of the third switch (Tn-x) connected to a first secondary circuit (Rx) is carried out exclusively relative to the operation of another third switch (Tm-y) between the connection point (A) of said coil and a second secondary circuit (Ry).

2. Control method according to Claim 1, in which the operation of the third switch (Tn-x) is carried out exclusively relative to the operation of the first and second switches (T+n, T-n).

3. Control method according to either of the preceding claims, in which a dead time is introduced between the operations carried out on the third switches (Tn-x) so as to avoid short circuits between the primary circuit (RP) and the secondary power supply circuits (Rx).

4. Use of the control method according to any one of Claims 1 to 3 for a static voltage step-up or step-down converter.

5. Use of the control method according to any one of Claims 1 to 3 for a simultaneous variator and converter.

6. Use of the control method according to any one of Claims 1 to 3 for a dual-voltage variable-reluctance alternator-starter.

## Patentansprüche

1. Verfahren zur Steuerung einer Maschine, die mindestens eine Induktionswicklung (n) aufweist, wobei die Induktionswicklung mit einem primären elektrischen Energieversorgungsnetz (RP) über eine Steuervorrichtung verbunden ist, die zwischen einem Anschlusspunkt (A) der betrachteten Wicklung (n) und Klemmen des primären Netzes (RP) mindestens eine Halbbrücke eines Reglers aufweist, der für die Steuerung der Maschine geeignet ist, wobei diese Halbbrücke von ersten und zweiten gesteuerten Schaltern (T+n, T-n) gebildet wird, wobei der erste und der zweite Schalter je einen leitenden oder stromlosen elektrischen Zustand einnehmen können, **dadurch gekennzeichnet, dass:**
- der Anschlusspunkt (A) der Wicklung (n) mit mindestens einem dritten gesteuerten Umleitungsschalter (Tn-x) verbunden wird, der einen stromlosen elektrischen Zustand oder einen leitenden elektrischen Zustand einnehmen kann, wobei dieser dritte Schalter (Tn-x) mit mindestens einem sekundären elektrischen Versorgungsnetz (Rx) verbunden ist,
- der elektrische Zustand des dritten Schalters (Tn-x) demjenigen der Halbbrücke zugeordnet wird, so dass die in der Induktionswicklung (n) der Maschine gespeicherte elektrische Energie an das Hauptnetz und/oder das sekundäre Netz rückübertragen wird,
- die Steuerung des dritten Schalters (Tn-x), der mit einem ersten sekundären Netz (Rx) verbunden ist, exklusiv bezüglich derjenigen eines anderen dritten Schalters (Tm-y) durchgeführt wird, der zwischen dem Anschlusspunkt (A) der Wicklung und einem zweiten sekundären Netz (Ry) verbunden ist.

2. Steuerverfahren nach Anspruch 1, bei dem die Steuerung des dritten Schalters (Tn-x) exklusiv bezüglich derjenigen der ersten und zweiten Schalter (T+n, T-n) durchgeführt wird.

3. Steuerverfahren nach einem der vorhergehenden Ansprüche, bei dem eine Totzeit zwischen die Steuerungen der dritten Schalter (Tn-x) eingeführt wird, um Kurzschlüsse zwischen dem primären Netz (RP) und den sekundären elektrischen Versorgungsnetzen (Rx) zu vermeiden.

4. Verwendung des Steuerverfahrens nach einem der Ansprüche 1 bis 3 für einen spannungserhöhenden oder spannungssenkenden statischen Wandler.

5. Verwendung des Steuerverfahrens nach einem der Ansprüche 1 bis 3 für einen Regler und gleichzeitigen Wandler.

6. Verwendung des Steuerverfahrens nach einem der Ansprüche 1 bis 3 für einen Alternator-Starter mit variabler Zweispannungs-Reluktanz.
